Europäisches Patentamt

European Patent Office

Office européen des brevets

(19)

(11) Publication number: **0 273 880 B1**

# EUROPEAN PATENT SPECIFICATION

(45) Date of publication of patent specification: **24.07.91**   (51) Int. Cl.⁵: **B60S 1/24**

(21) Application number: **87830420.3**

(22) Date of filing: **24.11.87**

(54) A crank device for operating a motor vehicle windscreen-wiper.

(30) Priority: **30.12.86 IT 5427786 U**

(43) Date of publication of application:
**06.07.88 Bulletin  88/27**

(45) Publication of the grant of the patent:
**24.07.91 Bulletin  91/30**

(84) Designated Contracting States:
**AT BE CH DE ES FR GB GR IT LI LU NL SE**

(56) References cited:
**GB-A- 2 140 289**

(73) Proprietor: **INDUSTRIE MAGNETI MARELLI S.p.A.**
**Via Adriano 81**
**I-20128 Milano(IT)**

(72) Inventor: **Pedani, Giuseppe**
**Via Cannicci 7**
**I-53037 San Gimignano (Siena)(IT)**

(74) Representative: **Notaro, Giancarlo et al**
**c/o Jacobacci-Casetta & Perani S.p.A. Via Alfieri, 17**
**I-10121 Torino(IT)**

## Description

The present invention relates to a crank device for operating a motor-vehicle windscreen-wiper, of the type arranged to carry the windscreen-wiper blades into rest positions beyond their normal end-of-stroke positions as a result of a rotation of the geared motor unit in the opposite sense, the device comprising two half-cranks articulated together and connected at their opposite ends to the output shaft of the geared motor unit and to a connecting rod for driving the windscreen-wiper respectively.

A device of the above type is described and illustrated, for example, in Italian Patent Application IT-A- 21264-A/83 and in the corresponding French Patent Application FR-A- 2 546459 or GB-A-2 140 289. This device does not always operate reliably since dust and dirt accumulating in the articulation zone between the two half-cranks expose it to the risk of jamming.

The object of the present invention is to avoid this problem in a simple and economical manner.

The principal characteristic of the invention lies in the fact that the two half-cranks are disposed within a lubricant-filled container constituted by a pair of half-casings, sealed together for reciprocal rotation about the axis of articulation of the two half-cranks, the two half-casings further being provided in their opposite faces with two respective, peripheral apertures for the passage of the members for connection to the geared motor unit and to the connecting rod for driving the windscreen-wiper.

The invention will now be described with reference to the appended drawings, provided purely by way of non-limiting example, in which:

Figure 1 is a schematic view of a windscreen-wiper device for motor vehicles, illustrated in its normal end-of-stroke position,

Figure 2 illustrates the device of Figure 1 in the rest position, situated beyond the end-of-stroke position illustrated in Figure 1, and

Figures 3, 4 are a sectional view and a frontal view of the device according to the invention.

With reference to the drawings, reference numeral 1 generally indicates a windscreen-wiper device comprising a pair of windscreen-wiper blades 2 which are rotatably supported at 3 and driven by a geared-motor unit (not illustrated), including an electric motor and a reduction gear, through a lever system 4. The lever system 4 comprises a pair of arms 5 connected to the windscreen-wiper blades and a pair of connecting rods 6, 6 for connecting these arms to a crank device 7.

The crank device 7 comprises two half-cranks 8, 9 reciprocally articulated at 10 and having their opposite ends 11, 12 connected to the output shaft of the geared motor unit and to the connecting rod 6 respectively.

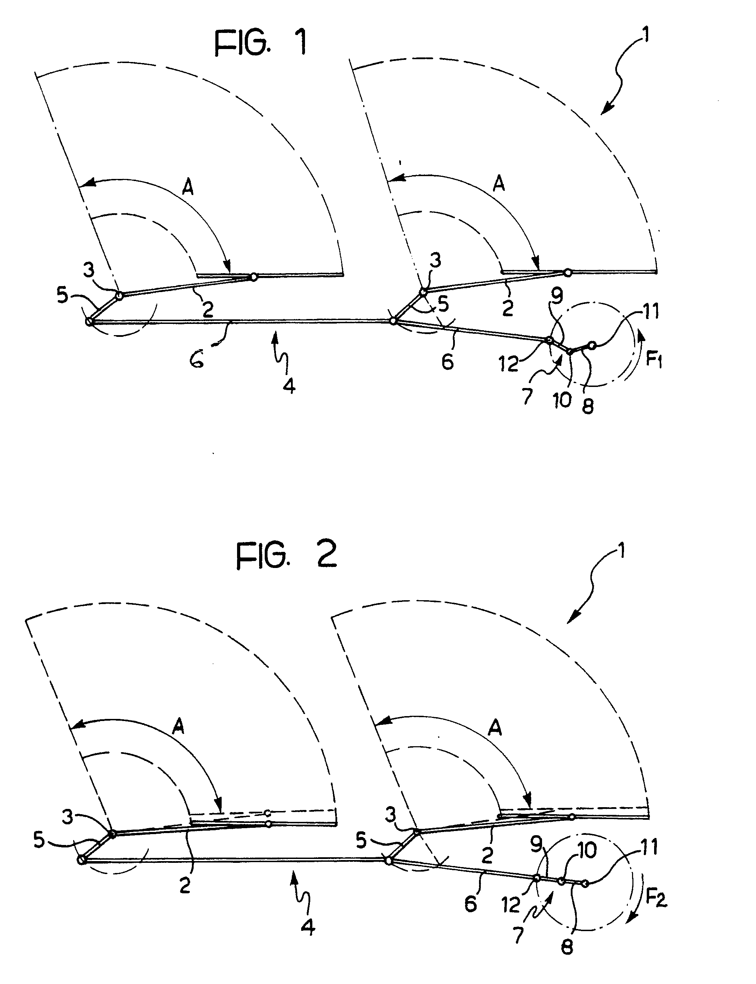

During normal operation of the windscreen-wiper, the crank device 7 rotates in the sense indicated by the arrow F1 in Figure 1. As a result of this rotation, the windscreen-wipers cover the angles indicated A in Figure 1. In this condition, the two half-cranks 8 and 9 are inclined to each other, always at the angle illustrated in Figure 1, due to the mutual interengagement of stop surfaces (not illustrated) provided on the two half-cranks. These stop surfaces are not illustrated in detail since they can be produced in any known manner (for example, as described in Italian Patent Application IT-A- 21 264-A/83) and they do not fall within the scope of the present invention. Figure 1 illustrates the two blades in their lower end-of-stroke positions. When the windscreen-wiper device is not in use, the two blades 2 can be brought into rest positions beyond their normal end-of-stroke positions, by means of a rotation of the geared motor unit in the opposite sense (arrow F2 in Figure 2) so as to length the crank device 7.

In order to ensure that the crank device 7 operates perfectly and, in particular, to protect the protection 10 from the risk of jamming, the two half-cranks 8, 9 are situated inside a container 13 filled with lubricant (grease).

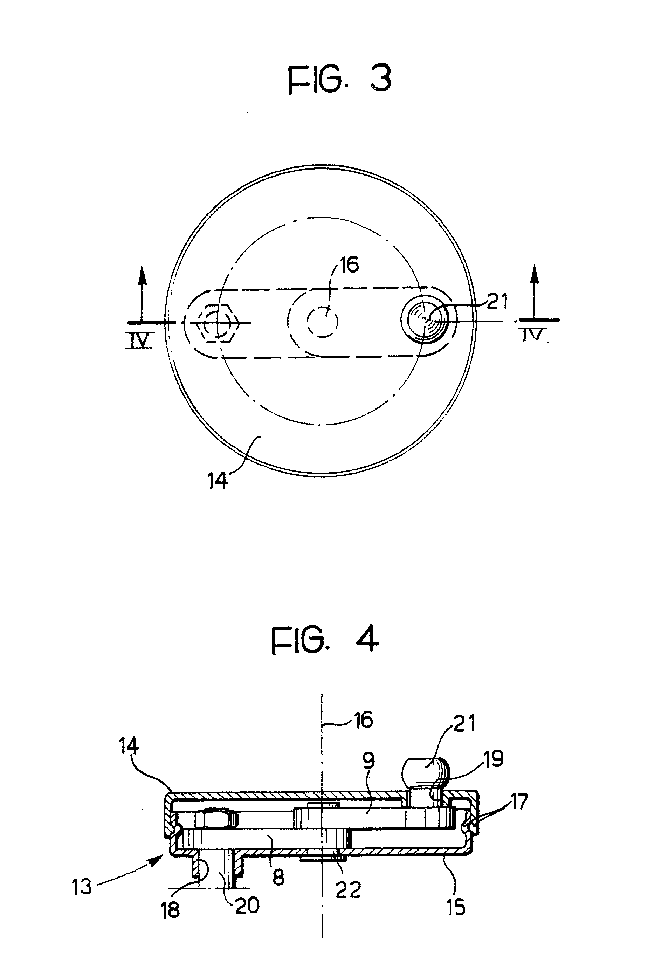

The container 13 consists of two half-casings 14, 15 of circular shape which are sealed and mounted for rotation about the axis 16 of articulation of the two half-cranks 8, 9. In the embodiment illustrated in Figure 3, the two half-casings 14, 15 are held together by means of the mutual engagement of their shaped peripheral edges 17.

Furthermore, the two half-casings 14, 15 have each a respective aperture 18, 19 in their two opposite faces for the passage of members 20, 21 for connection to the geared motor unit and to the connecting rod 6. Finally, in Figure 3, the pin for the articulation of the two half-cranks 8, 9 is shown at 22 and is carried by the half-casing 15.

## Claims

1. A crank device for operating a motor-vehicle windscreen-wiper (1), arranged to bring the windscreen-wiper blades (2) into rest positions, beyond their normal end-of-stroke positions, as a result of the rotation of the geared motor unit in the opposite sense, the device comprising two half-cranks (8,9) articulated to each other (16) and connected at their opposite ends to the output shaft (20) of the geared motor and to a connecting rod (6) for driving the windscreen wipers respectively,

   characterised in that the two half-cranks (8,9) are situated inside of a lubricant-filled container (13) constituted by a pair of half-casings (14, 15) sealed together for reciprocal rotation about the axis of articulation (16) of the two half-cranks, the two half-casings (14, 15) further being provided, in their opposite faces, with two respective peripheral apertures (18, 19) for the passage of the members (20, 21) for connection to the electric motor and to the connecting rod (6) for driving the windscreen-wiper.

## Revendications

1. Dispositif à manivelle, pour faire fonctionner un essuie-glace (1) d'un véhicule automobile, agencé pour porter les balais d'essuie-glace (2) en des positions de repos situées au-delà de leurs positions normales de fin de course, à la suite de la rotation en sens opposé de l'ensemble motoréducteur, le dispositif comprenant deux demi-manivelles (8,9), articulées ensemble (16) et reliées à leurs extrémités opposées d'une part à l'arbre de sortie (20) du motoréducteur et d'autre part à une bielle (6), pour entraîner les portes-balai d' essuie-glace, caractérisé en ce que les deux demi-manivelles (8,9) sont situées à l'intérieur d'un récipient (13) rempli de lubrifiant, constitué par deux demi-carters (14,15) fermés hermétiquement ensemble et permettant une rotation alternée autour de l'axe d'articulation (16) des deux demi-manivelles, les deux demi-carters (14,15) étant en outre pourvus, sur leur faces opposées, de deux ouvertures périphériques respectives (18,19) pour le passage des organes (20,21) servant à la liaison au moteur électrique et à la bielle (6) servant à l'entraînement de l'essuie-glace.

## Patentansprüche

1. Kurbelvorrichtung zum Betreiben eines Kraftfahrzeugscheibenwischers (1), die so ausgelegt ist, daß sie die Scheibenwischblätter (2) als Folge der Drehung der Getriebemotoreinheit in entgegengesetzte Richtung in Ruhestellungen, d.h. über ihre normalen Wischtaktende-Stellungen hinaus, bringt, wobei die Vorrichtung zwei Halbkurbeln (8, 9) umfaßt, die miteinander (16) gliedartig aufgehängt verbunden sind und an ihren gegenüberliegenden Enden jeweils mit der Ausgangswelle (20) des Getriebemotors bzw. einer Verbindungsstange (6) zum Betreiben der Wischblätter verbunden sind, **dadurch gekennzeichnet,** daß die zwei Halbkurbeln (8, 9) in einem mit Schmiermittel gefüllten Behälter (13) angeordnet sind, der durch ein Paar Gehäusehälften (14, 15) gebildet ist, welche zur reziproken Drehung um die Aufhängungsachse (16) der zwei Halbkurbeln miteinander dicht verbunden sind, wobei die zwei Gehäusehälften (14, 15) weiterhin an ihren gegenüberliegenden Stirnflächen mit zwei entsprechenden Umfangsöffnungen (18, 19) für die Aufnahme der Elemente (20, 21) zur Verbindung mit dem Elektromotor bzw. mit der Verbindungsstange (6) zum Antrieb des Scheibenwischers versehen sind.

# FIG. 1

# FIG. 2

# FIG. 3

# FIG. 4